# EUROPÄISCHE PATENTSCHRIFT

(11) **EP 1 339 592 B1**
(45) Veröffentlichungstag und Bekanntmachung des Hinweises auf die Patenterteilung: **08.12.2004**
(21) Anmeldenummer: 01271804.5
(22) Anmeldetag: 26.10.2001
(51) Int. Cl.: B60T 17/08

(54) **FEDERSPEICHERBREMSZYLINDER MIT EINER NOTLÖSEEINRICHTUNG**
SPRING STORAGE BRAKE CYLINDER WITH EMERGENCY RELEASE DEVICE
CYLINDRE DE FREIN A ACCUMULATEUR COMPRENANT UN DISPOSITIF DE DESSERRAGE D'URGENCE

(30) Priorität: 02.11.2000 DE 10054149
(43) Veröffentlichungstag der Anmeldung: 03.09.2003
(73) Patentinhaber: KNORR-BREMSE Systeme für Schienenfahrzeuge GmbH, 80809 München (DE)
(72) Erfinder: BERRA, Philippe, F-64000 Pau (FR); GUMEZ, Hervé, F-64230 Lescar (FR)
(86) Internationale Anmeldenummer: PCT/EP2001/012380
(87) Internationale Veröffentlichungsnummer: WO 2003/039933

(56) Entgegenhaltungen:
- EP-A- 0 072 404
- EP-A- 0 875 433
- DE-A- 2 608 502
- DE-A- 2 751 607
- US-A- 4 550 811

## Beschreibung

Die Erfindung betrifft einen Federspeicherbremszylinder, insbesondere für Schienenfahrzeuge, mit einer Notlöseeinrichtung und mit einem innerhalb eines Gehäuses axial bewegbaren Federspeicherkolben, der einerseits durch eine Speicherfeder zum Betätigen der Bremse bei Druckabfall und andererseits durch eine druckmittelbeaufschlagbare Federspeicherdruckkammer zum Lösen dieser Federspeicherbremse bewegbar ist, sowie einem im Kraftfluss zwischen dem Federspeicherkolben und einer abtriebsseitigen Kolbenstange angeordneten, normalerweise gesperrten, nichtselbsthemmenden Gewindespindeltrieb, der über einen der Notlöseeinrichtung zugeordneten Riegel manuell entsperrbar ist, um die Federspeicherbremse ohne Druckmittel lösen zu können.

Federspeicherzylinder der vorstehend beschriebenen Art werden als sicherheitsrelevante Baugruppe vorzugsweise im Schienenfahrzeugbau zur Gewährleistung einer Bremsbetätigung bei nicht vorhandenem Bremsdruck eingesetzt. Die Bremsbetätigung ist bei einem Federspeicherzylinder allein über die Speicherfeder möglich, so dass der Federspeicherzylinder sowohl als Feststellbremse eines Schienenfahrzeuges im abgestellten Zustand als auch als Sicherheitsbremse bei einer im Fahrbetrieb undichten oder ausgefallenen Druckluftanlage benutzbar ist.

Ein gattungsgemäßer Federspeicherzylinder ist aus der DE-OS 26 08 502 bekannt. Der Federspeicherzylinder besteht im wesentlichen aus einem zylindrischen Gehäuse mit einer innenliegenden Speicherfeder, die zur Bremsbetätigung den Kolben im Falle eines in der Druckkammer abfallenden Drucks von der gegenüberliegenden Seite her beaufschlagt, so dass die abtriebsseitige Kolbenstange ausfährt. Ein Lösen der Bremse erfolgt durch Druckmittelbeaufschlagung der Druckkammer, wobei die Speicherfeder wieder gespannt wird und die Kolbenstange einfährt.

Der Federspeicherzylinder verfügt weiterhin über eine Notlöseeinrichtung zum Unterbrechen und automatischen Rückführen in die vorstehend erläuterte normale Betriebsweise des Federspeicherzylinders, wozu ein im Kraftfluss zwischen dem Kolben und der Kolbenstange angeordneter sperrbarer, nichtselbsthemmender Gewindespindeltrieb gesperrt oder entsperrt wird. Der Gewindespindeltrieb besteht im wesentlichen aus einem bezüglich des Gehäuses drehbaren und einem drehfesten Teil. Der drehbare Teil kann entweder eine mit dem Kolben zusammenwirkende Mutter sein, die im Gewindeeingriff mit einer an der Kolbenstange ausgebildeten Spindel steht; als drehbares Teil kann auch die Spindel ausgeführt sein, die dann drehbar bezüglich der Kolbenstange gelagert ist, wobei deren zugeordnete Mutter drehfest bezüglich des Kolbens angeordnet ist. Beide Prinzipe erfüllen dieselbe Funktion.

Während des normalen Bremsbetriebes - d.h. bei Vorhandensein von Druck - ist der drehbare Teil des Gewindespindeltriebes über einen Riegel gesperrt, so dass ein starrer Kraftfluss zwischen dem Kolben und der Kolbenstange hergestellt ist, um eine druckmittelbetriebene Rückstellung des Kolbens unter Spannen der Speicherfeder in vorstehend beschriebener Weise zu ermöglichen. Die Notlöseeinrichtung ist für den Fall erforderlich, dass kein Druck zum Zusammendrücken der Speicherfeder und folglich zum Lösen der Bremse verfügbar ist, jedoch das Schienenfahrzeug - beispielsweise beim Rangieren - bewegt werden muss. Es wird hierbei die Kraftübertragung vom Kolben zur Kolbenstange von außen her durch Entsperren des nichtselbsthemmenden Gewindespindeltriebes über den Riegel manuell unterbrochen, wodurch ein Lösen der Bremsen ohne Druck möglich ist. Die Rückführung in den ursprünglichen Betriebszustand des Federspeicherzylinders erfolgt automatisch bei wieder verfügbarem Druck, welcher dann infolge des Zusammendrückens der Speicherfeder eine Rückbewegung der Teile der Notlöseeinrichtung bewirkt.

Diese Funktion wird im Stand der Technik über eine am drehbaren Teil des Gewindespindeltriebes außenradial vorgesehene Sperrklinkenverzahnung realisiert, die mit dem Riegel nach Art eines Zahngesperres im Eingriff steht. Die Sperrklinkenverzahnung gestattet eine relative Drehbewegung des drehbaren Teil des Gewindespindeltriebes in nur eine Richtung, wogegen die Drehung in die andere Richtung durch die Sperrflanken der Verzahnung verhindert wird.

Hierbei tritt das Problem auf, dass bei einem Einrasten der Verriegelung vor dem Stillstand der rotierenden Teile, insbesondere bei einer kurzzeitigen Betätigung infolge eines Abrutschens vom Handgriff des Riegels, das Zahngesperre stark abgenutzt und beschädigt werden kann. Bei extremer Kälte kann es insbesondere aufgrund der dann verminderten Viskosität des Schmiermittels auch vorkommen, dass die Endstellung im notgelösten Zustand nicht zuverlässig erreicht wird, so dass die Bremse nicht vollkommen gelöst werden kann. Dieser ungünstige Zustand wird dann durch einen Wiedereingriff des Riegels fixiert. Die Herstellung der Sperrklinkenverzahnung am drehbaren Teil des Gewindespindeltriebes ist darüber hinaus fertigungstechnisch recht aufwendig.

Es ist daher die Aufgabe der vorliegenden Erfindung einen Federspeicherbremszylinder der vorstehend beschriebenen Art dahingehend weiterzuverbessern, dass auf einfache Weise eine zuverlässige Funktion der Notlöseeinrichtung erzielt wird.

Die Aufgabe wird ausgehend von einem Federspeicherbremszylinder gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass dem relativ zum Gehäuse drehbaren Teil des Gewindespindeltriebes eine außenradiale Gleitfläche für den hieran in Anlage gehaltenen Riegel zugeordnet ist, an welcher eine formschlüssig mit dem Riegel zusammenwirkende Sperrflanke zum Sperren der Notlöseeinrichtung ausgebildet ist, wobei die Steigung des Gewindespindeltriebes derart bemessen ist, dass der drehbare Teil des Gewindespindeltriebes über seinen maximalen axialen Verstellhub weniger als eine ganze Umdrehung ausführt.

Der Vorteil der Erfindung liegt insbesondere darin, dass durch die Vermeidung einer Vielzahl von Zähnen am Zahngesperre eine Abnutzung der Verzahnung durch eine ungünstige Eingriffssituation des Riegels während der Bewegung des drehbaren Teil des Gewindespindeltriebes vermieden wird. Der Riegel kommt im Falle einer kurzzeitigen Betätigung infolge eines Abrutschens vom Handgriff des Riegels immer an der Gleitfläche zur Anlage. Ein zu einer Beschädigung führendes Überspringen eines Zahnes durch den Riegel wird dadurch ausgeschlossen, dass das drehbare Teil des Gewindespindeltriebes nur maximal eine volle Umdrehung ausführen kann. Hierdurch ist die Einraststellung des Riegels genau definiert. Diese befindet sich ausschließlich in der Endposition des Kolbens nach einem Wiederherstellen der Betriebsbereitschaft aus dem notgelösten Zustand des Federspeicherbremszylinders.

Vorteilhafter Weise ist die Gleitfläche des relativ zum Gehäuse drehbaren Teils des Gewindespindeltriebes nach Art einer Kurvenbahn ausgebildet. In diesem Falle weist die an der kurvenbahnartigen Gleitfläche ausgebildete Sperrflanke vorzugsweise eine im wesentlichen radial ausgerichtete Fläche auf, um einen sicheren Eingriff des Riegels zu gewährleisten. Die kurvenbahnartige Ausgestaltung der Gleitfläche hat den Vorteil, dass die hierbei im Zusammenwirken mit dem Riegel entstehende Hubdifferenz zur Anzeige des Schaltzustandes der Notlöseeinrichtung nutzbar ist. Die Kurvenbahn kann mit zusätzlichen Anformungen oder Vertiefungen ausgestattet sein, um über unterschiedliche damit verbundene Hubdifferenzen beispielsweise im notgelösten Zustand den Grad des Lösens der Bremse auf einfache Weise von außen her beurteilen zu können.

Die an der Gleitfläche ausgebildete Sperrflanke kann im Rahmen der vorliegenden Erfindung nutartig als Vertiefung oder zahnartig als Erhöhung oder in anderer einen Rasteingriff mit dem Riegel gestattender Weise geformt sein.

Die erfindungsgemäß ausgebildete Notlöseeinrichtung ermöglicht einen Einsatz bei Federspeicherbremszylindem mit einem relativ zum Gehäuse drehbaren Teil des Gewindespindeltriebes, das als eine gemeinsam mit der Kolbenstange axial verschiebbare Spindel ausgebildet ist, die drehbar um die Kolbenstange gelagert ist, wobei in diesem Falle die Spindel mit einer ortsfest zum Federspeicherkolben angeordneten Mutter als drehstarrer Teil des Gewindespindeltriebes zusammenwirkt.

Alternativ dazu ist auch ein Einsatz bei Federspeicherbremszylindern möglich, bei denen der relativ zum Gehäuse drehbare Teil des Gewindespindeltriebes als eine gemeinsam mit dem Federspeicherkolben axial verschiebbare Mutter ausgebildet ist, die drehbar koaxial am Federspeicherkolben gelagert ist, und die mit einer ortsfest zur Kolbenstange angeordneten Spindel als drehstarrer Teil des Gewindespindeltriebes zusammenwirkt.

Im erstgenannten Fall einer drehbeweglichen Spindel kann ein Zahnradelement, welches die erfindungsgemäße außenradiale Gleitfläche mit Sperrflanke aufweist, ortsfest endseitig an der Spindel als separates Bauteil befestigt werden. Insgesamt wird damit die Herstellung der drehbeweglichen Spindel vereinfacht und ein separater Austausch eines verschlissenen Bauteils ist durch Demontage möglich.

Vorzugsweise ist eine zwischen dem Riegel und dem Gehäuse angeordnete Feder vorgesehen, um nach Art einer Druck- oder Zugfeder den Riegel in stetiger Anlage an der Gleitfläche des drehbaren Teils des Gewindespindeltriebes zu halten. Es ist denkbar den Riegelneben einer manuellen Betätigung - entgegen der Federkraft auch mittels einer Hilfseinrichtung fembedienbar zu betätigen. Als Hilfseinrichtung könnte ein schaltergesteuerter elektrischer oder pneumatischer Aktor eingesetzt werden, wobei die hierfür benötigte Hilfsenergie gegebenenfalls durch Speicherung in einer Batterie bzw. einem Druckbehälter zur Verfügung gestellt werden kann.

Weitere die Erfindung verbessernde Maßnahmen sind in den abhängigen Ansprüche aufgeführt oder werden nachstehend gemeinsam mit der Beschreibung eines bevorzugten Ausführungsbeispiels der Erfindung anhand der Figuren näher dargestellt. Es zeigt:
- Fig. 1: einen Längsschnitt durch einen Federspeicherbremszylinder mit einer Notlöseeinrichtung gemäß der vorliegenden Erfindung,
- Fig. 2a: eine Draufsicht einer schematische Darstellung eines erfindungsgemäßen Zahngesperres im betriebsbereiten Zustand,
- Fig. 2b: eine Seitenansicht des Zahngesperres nach Fig. 2a,
- Fig. 3a: eine Draufsicht einer schematische Darstellung eines erfindungsgemäßen Zahngesperres im notgelösten Zustand, und
- Fig. 3b: eine Seitenansicht des Zahngesperres nach Fig. 3a.

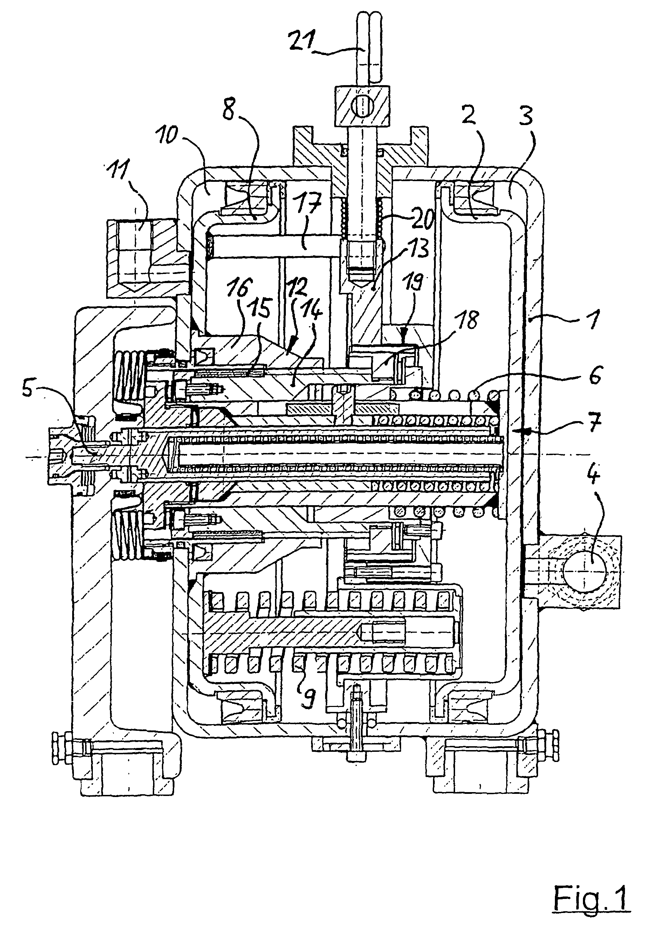

Der Federspeicherbremszylinder gemäß Fig. 1 besteht im wesentlichen aus einem zweigeteilten, im wesentlichen zylinderförmigen Gehäuse 1, das innerhalb einer ersten Hälfte einen axial verschiebbaren Betriebsbremskolben 2 enthält, der über eine zugeordnete Betriebsbremsdruckkammer 3 durch den am Gehäuse 1 angeordneten Anschluss 4 mit Druckmittel beaufschlagbar ist, um über eine aus den Gehäuse 1 abgedichtet herausgeführte und koaxial am Betriebsbremskolben 2 befestigte Kolbenstange 5 eine Bremskraft auf ein (hier nicht weiter dargestelltes) Bremsgestänge eines Schienenfahrzeuges zu übertragen. Die Rückstellung des Betriebsbremskolbens 2 erfolgt im entlüfteten Zustand der Betriebsbremsdruckkammer 3 im wesentlichen über die Kraftwirkung einer zwischen dem Gehäuse 1 und dem Betriebsbremskolben 2 wirkenden Rückholfeder 6. Die Kolbenstange 5 ist ferner mit einer mechanischen Nachstelleinrichtung 7 zum Ausgleich eines durch Abnutzung der Bremsbeläge entstehenden Verschleißspieles ausgestattet.

Neben der vorstehend beschriebenen Betriebsbremse ist im Federspeicherbremszylinder auch eine Federspeicherbremse integriert, wozu innerhalb der zweiten Hälfte des Gehäuses 1 ein axial bewegbarer Federspeicherkolben 8 angeordnet ist. Der Federspeicherkolben 8 ist einerseits durch mehrere Speicherfedern 9 bewegbar, die in gleichen radialen Abständen und in untereinander äquidistanten Abständen bezüglich des Federspeicherkolbens 8 angeordnet sind und auf der anderen Seite mit Teilen des Gehäuses 1 zusammenwirken, um die Bremse bei einem signifikanten Druckabfall automatisch zu betätigen. Auf der anderen Seite des Federspeicherkolbens 8 befindet sich eine Federspeicherdruckkammer 10. Die Federspeicherdruckkammer 10 verfügt über einen zugeordneten Anschluss 11 und ist zum Lösen der Federspeicherbremse, also zum Rückstellen des Federspeicherkolbens 8 entgegen der von der Speicherfeder ausgeübten Kraft, mit Druckmittel beaufschlagbar.

Im Kraftfluss zwischen dem Federspeicherkolben 8 und der abtriebsseitigen Kolbenstange 5 ist ein während des normalen Bremsbetriebes gesperrter, nichtselbsthemmender Gewindespindeltrieb 12 angeordnet, der über einen der Notlöseeinrichtung zugeordneten Riegel 13 manuell entsperrbar ist, um die Federspeicherbremse ohne Druckmittel lösen zu können.

Der relativ zum Gehäuse 1 drehbare Teil des Gewindespindeltriebes 12 ist als eine gemeinsam mit der Kolbenstange 5 axial verschiebbare Spindel 14 ausgebildet, die drehbar um die Kolbenstange 5 gelagert ist. Die Spindel 14 ist über eine außenradiale Kunststoffbuchse 15 verschiebbar und drehbar im Gehäuse 1 geführt.

Mit der Spindel 14 wirkt eine ortsfest zum Federspeicherkolben 8 angeordneten Mutter 16 als drehstarrer Teil des Gewindespindeltriebes 12 zusammen. Eine Drehbewegung des Federspeicherkolbens 8 mit Mutter 16 wird dabei durch eine Drehmomentsperre 17 verhindert, die mit Teilen des Gehäuses 1 nach Art eines mechanischen Anschlages zusammenwirkt.

Zum Sperren und Entsperren des Gewindespindeltriebes 12 ist ein Zahnradelement 18 vorgesehen, das an der Spindel 14 ortsfest aber demontierbar befestigt ist. Das Zahnradelement 18 weist eine außenradiale Gleitfläche 19 mit einer (an späterer Stelle näher beschriebenen) Sperrflanke für dem hiermit zur Bildung der Notlöseeinrichtung zusammenwirkenden Riegel 13 auf. Zwischen dem Riegel 13 und dem Gehäuse 1 ist eine nach Art einer Druckfeder ausgebildete Feder 20 angeordnet, um den Riegel 13 in stetiger Anlage an der Gleitfläche 19 des Zahnradelements 18 zu halten. Über einen außenliegenden Griff 21 kann der Riegel 13 von der Gleitfläche 19 entgegen der Kraft der Feder 21 manuell abgehoben werden.

In der gezeigten Stellung befindet sich der Federspeicherbremszylinder im notgelösten Zustand. Hierbei ist die Federspeicherbremse durch Ziehen am Riegel 13, was den formschlüssigen Eingriff am Zahnradelement 18 aufhebt, ohne Druckmittel gelöst worden. Durch das damit erfolgte Entsperren des Gewindespindeltriebes 12 ist die Spindel 14 frei drehbar, so dass aufgrund von Rückstellkräften, die u.a. von der Rückholfeder 6 ausgehen, eine axiale Einfahrbewegung der mit der Spindel 14 verbundenen Kolbenstange 3 zum Lösen der Bremse bewirkt wird. Die Steigung des Gewindespindeltriebes ist dabei derart bemessen ist, dass die Spindel 14 mit Zahnradelement 18 über ihren maximalen axialen Verstellhub weniger als eine ganze Umdrehung ausführt.

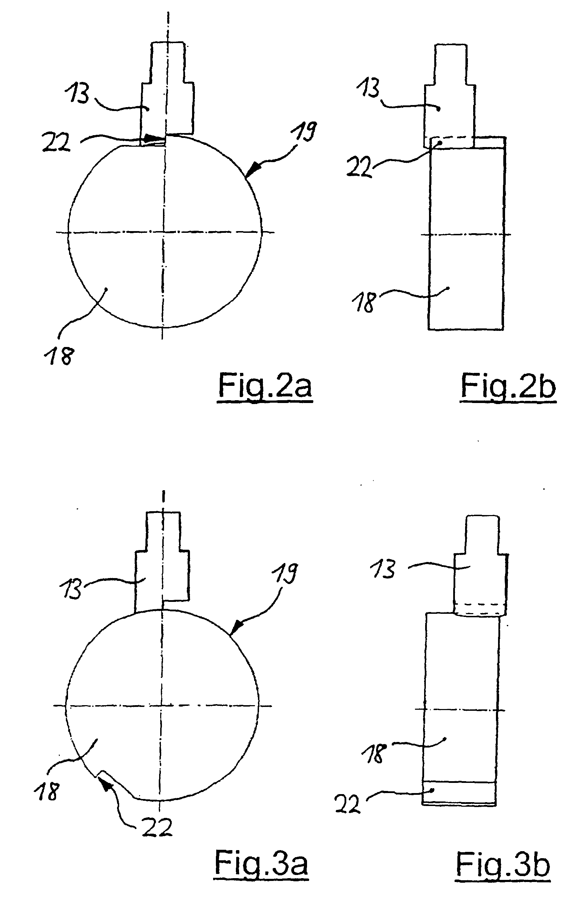

Gemäß der Einzeldarstellung nach Figur 2a erfolgt der formschlüssige Eingriff des Riegels 13 am Zahnradelement 18 an einer einzigen hieran radialgerichtet ausgebildeten Sperrflanke 22, so dass der Gewindespindeltrieb 12 gesperrt ist. Die übrige Umfangsfläche des Zahnradelements 18 ist hier als gleichmäßige Kurvenbahn 19 ausgebildet. Im gezeigten gesperrten Zustand befindet sich das Zahnradelemnt 18 - wie aus Figur 2b hervorgeht - in einer axialen Endstellung, in der ein formschlüssiges Zusammenwirken mit dem Riegel 13 noch gewährleistet ist. Es kann in diesem gesperrten Zustand ein normaler Bremsbetrieb erfolgen, wobei eine Axialverschiebung zwischen dem ortsfesten Riegel 13 und dem axial bewegbaren Zahnradelement 18 bei einer Hubbewegung der Kolbenstange 5 auftritt.

In dem in Figur 3a dargestellten notgelösten Zustand ist der formschlüssige Eingriff zwischen Riegel 13 und Zahnradelement 18 aufgehoben. Der Gewindespindeltrieb 12 ist hierbei entsperrt und der Riegel 13 kann frei über die Kurvenbahn 19 gleiten. Nach dem Entsperren erfolgt eine axiale Relativbewegung zwischen Riegel 13 und Zahnradelement 18, ausgehend von der in Fig. 3b gezeigten Endstellung in die in Figur 2b gezeigten Endstellung infolge der axialen Einfahrbewegung der Kolbenstange 5 samt Spindel 14. Zur Herstellung der Wiederbereitschaft wird bei wieder vorhandenem Druckmittel automatisch ein Lösehub des Federspeicherkolbens 8 unter Zusammendrücken der Speicherfedern 9 ausgeführt, wobei ein Rückdrehen der entsperrten Spindel 14 mit dem daran befestigten Zahnrad 19 erfolgt, bis der Riegel 13 wieder in formschlüssigen Eingriff mit der Sperrflanke 22 gelangt und somit der gesperrte Zustand des Gewindespindeltriebes 12 wieder hergestellt ist. Ein normaler Bremsbetrieb ist nun wieder möglich.

Die Erfindung ist nicht beschränkt auf das vorstehend beschriebene bevorzugte Ausführungsbeispiel. Es sind vielmehr auch Abwandlungen hiervon denkbar, die trotz anders gearteter Ausführung in den durch die Ansprüche definierten Schutzbereich eingreifen. Insbesondere ist die Erfindung nicht beschränkt auf eine Ausführungsform mit drehbarer Spindel und demgegenüber drehstarrer Mutter. Es ist auch eine Anwendung bei dem umgekehrten Prinzip einer drehbaren Mutter mit demgegenüber drehstarrer Spindel denkbar.

### Bezugszeichenliste

- **1**: Gehäuse
- **2**: Betriebsbremskolben
- **3**: Betriebsbremsdruckkammer
- **4**: Anschluss
- **5**: Kolbenstange
- **6**: Rückholfeder
- **7**: Nachstelleinrichtung
- **8**: Federspeicherkolben
- **9**: Speicherfeder
- **10**: Federspeicherdruckkammer
- **11**: Anschluss
- **12**: Gewindespindeltrieb
- **13**: Riegel
- **14**: Spindel
- **15**: Kunststoffbuchse
- **16**: Mutter
- **17**: Drehmomentsperre
- **18**: Zahnradelement
- **19**: Gleitfläche
- **20**: Feder
- **21**: Griff
- **22**: Sperrflanke

## Patentansprüche

1. Federspeicherbremszylinder mit einer Notlöseeinrichtung, insbesondere für Schienenfahrzeuge, und mit einem innerhalb eines Gehäuses (1) axial bewegbaren Federspeicherkolben (8), der einerseits durch eine Speicherfeder (9) zum Betätigen der Bremse bei Druckabfall und andererseits durch eine druckmittelbeaufschlagbare Federspeicherdruckkammer (10) zum Lösen dieser Federspeicherbremse bewegbar ist, sowie einem im Kraftfluss zwischen dem Federspeicherkolben (8) und einer abtriebsseitigen Kolbenstange (5) angeordneten normalerweise gesperrten nichtselbsthemmenden Gewindespindeltrieb (12), der über einen der Notlöseeinrichtung zugeordneten Riegel (13) manuell entsperrbar ist, um die Federspeicherbremse ohne Druckmittel zu lösen,
**dadurch gekennzeichnet, dass** dem relativ zum Gehäuse (1) drehbaren Teil des Gewindespindeltriebes (12) eine außenradiale Gleitfläche (19) für den hieran in Anlage gehaltenen Riegel (13) zugeordnet ist, an welcher nur eine formschlüssig mit dem Riegel (13) zusammenwirkende Sperrflanke (22) zum Sperren der Notlöseeinrichtung ausgebildet ist, wobei die Steigung des Gewindespindeltriebes (12) derart bemessen ist, dass der drehbare Teil des Gewindespindeltriebes (12) über seinen maximalen axialen Verstellhub weniger als eine ganze Umdrehung ausführt.

2. Federspeicherzylinder nach Anspruch 1,
**dadurch gekennzeichnet, dass** die Gleitfläche (19) des relativ zum Gehäuse (1) drehbaren Teils des Gewindespindeltriebes (12) nach Art einer Kurvenbahn ausgebildet ist.

3. Federspeicherzylinder nach Anspruch 2,
**dadurch gekennzeichnet, dass** die an der kurvenbahnartigen Gleitfläche (19) ausgebildete Sperrflanke (22) eine im wesentlichen radial ausgerichtete Fläche ist.

4. Federspeicherzylinder nach Anspruch 2,
**dadurch gekennzeichnet, dass** über die durch die kurvenbahnförmige Gleitfläche (19) entstehende Hubdifferenz des Riegels (13) der Schaltzustand der Notlöseeinrichtung anzeigbar ist.

5. Federspeicherzylinder nach Anspruch 1 oder 2,
**dadurch gekennzeichnet, dass** die an der Gleitfläche (19) ausgebildete Sperrflanke (22) nutartig als Vertiefung oder zahnartig als Erhöhung geformt ist.

6. Federspeicherzylinder nach Anspruch 1,
**dadurch gekennzeichnet, dass** der relativ zum Gehäuse (1) drehbare Teil des Gewindespindeltriebes (12) als eine gemeinsam mit der Kolbenstange (5) axial verschiebbare Spindel (14) ausgebildet ist, die drehbar um die Kolbenstange (5) gelagert ist, und die mit einer ortsfest zum Federspeicherkolben (8) angeordneten Mutter (16) als drehstarrer Teil des Gewindespindeltriebes (12) zusammenwirkt (Fig.1).

7. Federspeicherzylinder nach Anspruch 6,
**dadurch gekennzeichnet, dass** ein Zahnradelement (18) ortsfest an der Spindel (14) befestigt ist, welches die außenradiale Gleitfläche (19) mit Sperrflanke (22) für dem hiermit zur Bildung der Notlöseeinrichtung zusammenwirkenden Riegel (13) aufweist.

8. Federspeicherzylinder nach Anspruch 6 oder 7,
**dadurch gekennzeichnet, dass** die Spindel (14) über eine außenradiale Kunststoffbuchse (15) verschiebbar und drehbar im Gehäuse (1) geführt ist.

9. Federspeicherzylinder nach Anspruch 1,
**dadurch gekennzeichnet, dass** der relativ zum Gehäuse drehbare Teil des Gewindespindeltriebes als eine gemeinsam mit dem Federspeicherkolben axial verschiebbare Mutter ausgebildet ist, die drehbar koaxial am Federspeicherkolben gelagert ist, und die mit einer ortsfest zur Kolbenstange angeordneten Spindel als drehstarrer Teil des Gewindespindeltriebes zusammenwirkt.

10. Federspeicherzylinder nach einem der vorstehenden Ansprüche,
**dadurch gekennzeichnet, dass** eine zwischen dem Riegel (13) und dem Gehäuse (1) angeordnete Feder (20) vorgesehen ist, die nach Art einer Druck- oder Zugfeder ausgebildet ist und den Riegel (13) in stetiger Anlage an der Gleitfläche (19) des drehbaren Teils des Gewindespindeltriebes (12) hält.

11. Federspeicherzylinder nach einem der vorstehenden Ansprüche,
**dadurch gekennzeichnet, dass** der Riegel (13) mittels einer Hilfseinrichtung fernbedienbar ist.

## Claims

1. Spring-loaded brake cylinder including an emergency brake release means, in particular for rail vehicles, and including a spring-loaded piston (8) axially mobile within a housing (1), which is adapted to be moved, on the one hand, by an accumulator spring (9) for actuating the brake in the case of pressure drop and, on the other hand, by a spring-loaded pressure chamber (10) adapted to be pressurised by a pressurising medium for releasing this spring-loaded brake, as well as a non-self-locking threaded-spindle drive system (12) disposed in the power flow between said spring-loaded piston (8) and a piston rod (5) on the output side, which drive system is normally locked and can be manually unlocked via a bolt (13) associated with said emergency brake release means for releasing the spring-loaded brake without a pressurising medium,
**characterised in that** an outwardly radial sliding surface (19) for said bolt (13) held to bear against it is associated with that part of said threaded-spindle drive system (12), which is rotatable relative to said housing, on which surface only one locking flank (22) cooperating with said bolt (13) in a positive manner for locking said emergency brake release means, with the pitch of said threaded-spindle drive system (12) being so dimensioned that said rotatable part of the threaded-spindle drive system (12) performs less than one complete revolution over its maximum stroke of axial displacement.

2. Spring-loaded brake cylinder according to Claim 1,
**characterised in that** said sliding surface (19) of that part of said threaded-spindle drive system (12), which is rotatable relative to said housing (1), is configured in the manner of a curved track.

3. Spring-loaded brake cylinder according to Claim 2,
**characterised in that** said locking flank (22) formed on said sliding surface (19) configured in the form of a curved track is a substantially radially oriented surface.

4. Spring-loaded brake cylinder according to Claim 2,
**characterised in that** the switching condition of said emergency brake release means can be indicated via the difference in stroke of said bolt (13), which is created by said sliding surface (19) configured in the form of a curved track.

5. Spring-loaded brake cylinder according to Claim 1 or 2,
**characterised in that** said locking flank (22) formed on said sliding surface (19) is shaped in the manner of a groove as recess or in the form of a tooth as projection.

6. Spring-loaded brake cylinder according to Claim 1,
**characterised in that** the part of said threaded-spindle drive system (12), which is rotatable relative to said housing (1), is configured as a spindle (14) adapted for axial displacement together with said piston rod (5), which spindle is supported for rotation about said piston rod (5) and cooperates as torsionally rigid part of said threaded-spindle drive system (12) with a nut (16) in stationary arrangement relative to the spring-loaded piston (8) (Fig. 1).

7. Spring-loaded brake cylinder according to Claim 6,
**characterised in that** a toothed-gear element (18) is stationarily fastened on said spindle (14), which comprises said outwardly radial sliding surface (19) with said locking flank (22) for said bolt (13) cooperating therewith for forming said emergency brake release means.

8. Spring-loaded brake cylinder according to Claim 6 or 7,
**characterised in that** said spindle (14) is guided through an outwardly radial synthetic sleeve (15) for displacement and for rotation in said housing (1).

9. Spring-loaded brake cylinder according to Claim 1,
**characterised in that** the part of said threaded-spindle drive system (12), which is rotatable relative to said housing (1), is configured as a nut adapted for axial displacement together with said spring-loaded piston, which nut is coaxially supported on said spring-loaded piston and cooperates as torsionally rigid part of said threaded-spindle drive system with a spindle in stationary arrangement relative to said piston rod.

10. Spring-loaded brake cylinder according to any of the preceding Claims,
**characterised in that** a spring (20) is provided which is disposed between said bolt (13) and said housing (1) and which is configured in the manner of a compression or tension spring and holds said bolt (13) in a position permanently bearing against said sliding surface (19) of said rotatable part of said threaded-spindle drive system (12).

11. Spring-loaded brake cylinder according to any of the preceding Claims,
**characterised in that** said bolt (13) can be remote-controlled by means of an auxiliary means.

## Revendications

1. Cylindre de frein à ressort, comprenant un moyen de desserrage de frein de secours, en particulier pour véhicules sur rails, et comprenant un piston à ressort (8) mobile en sens axial au-dedans d'un carter (1), qui est apte à être déplacé, d'un côté, par un ressort accumulateur (9) à commander le frein au cas d'une chute de pression, et, d'autre côté, par une chambre à pression à ressort (10), apte à être mise sous pression par un milieu de comprimé afin de desserrer ce frein à ressort, et au plus un système d'entraînement à broche filetée (12), non autobloquant, qui est disposé dans la voie de force entre ledit piston à ressort (8) et une tige de piston (5) du côté de sortie, ce système d'entraînement étant bloqué normalement et étant apte à être desserré à la main via un verrou (13) affecté audit moyen de desserrage de frein de secours afin de desserrer le frein à ressort sans milieu comprimé,
**caractérisé en ce qu'**une surface de glissement (19) radiale vers l'extérieur pour ledit verrou (13), qui est tenu afin de porter contre lui, est affectée à cette partie dudit système d'entraînement à broche filetée (12), qui est rotative relativement audit carter, sur laquelle surface un seul flanc de blocage (22) est disposé pour une coopération avec verrou (13) à fermeture géométrique afin de bloquer ledit moyen de desserrage de frein de secours, au pas dudit système d'entraînement à broche filetée (12) étant dimensionné d'une telle manière, que ladite partie rotative du système d'entraînement à broche filetée (12) réalise un mouvement moins d'une révolution complète sur sa course maximale de déplacement axial.

2. Cylindre de frein à ressort selon la revendication 1,
**caractérisé en ce que** ladite surface de glissement (19) de cette partie dudit système d'entraînement à broche filetée (12), qui est rotative relativement audit carter (1), est configurée sous forme d'un chemin incurvé.

3. Cylindre de frein à ressort selon la revendication 2,
**caractérisé en ce que** ledit flanc de blocage (22), qui est formé sur ladite surface de glissement (19) configuré sous forme d'un chemin incurvé est une surface essentiellement orientée en sens radial.

4. Cylindre de frein à ressort selon la revendication 2,
**caractérisé en ce que** l'état de commutation dudit moyen de desserrage de frein de secours peut être signalé via la différence en course dudit verrou (13), qui est créée par ladite surface de glissement (19) configurée sous forme d'un chemin incurvé.

5. Cylindre de frein à ressort selon la revendication 1 ou 2,
**caractérisé en ce que** ledit flanc de blocage (22), qui est formé sur ladite surface de glissement (19), est formée de la manière d'une rainure en tant qu'un évidement ou sous forme d'une bosse en tant qu'un dent.

6. Cylindre de frein à ressort selon la revendication 1,
**caractérisé en ce que** la partie dudit système d'entraînement à broche filetée (12), qui est rotative relativement audit carter (1), est configurée sous forme d'une broche (14) apte à être déplacée, en sens axial, ensemble avec tige de piston (5), cette broche étant logée de manière rotative autour de ladite tige de piston (5) et coopérant, en tant que partie rigide à la torsion dudit système d'entraînement à broche filetée (12), avec un écrou (16) arrangé de façon stationnaire relativement au piston à ressort (8) (Fig. 1).

7. Cylindre de frein à ressort selon la revendication 6,
**caractérisé en ce qu'**un élément à roue dentée (18) est fixé, de façon stationnaire, à ladite broche (14), qui comprend ladite surface de glissement (19) radiale vers l'extérieur, avec ledit flanc de blocage (22), pour ledit verrou (13) coopérant avec lui afin de former ledit moyen de desserrage de frein de secours.

8. Cylindre de frein à ressort selon la revendication 6 ou 7,
**caractérisé en ce que** ladite broche (14) est guidée à travers une douille (15) en matière synthétique, radiale vers l'extérieur, pour son déplacement et sa rotation dans ledit carter (1).

9. Cylindre de frein à ressort selon la revendication 1,
**caractérisé en ce que** la partie dudit système d'entraînement à broche filetée (12), qui est rotative relativement audit carter (1), est configurée sous forme d'un écrou apte à se déplacer en sens axial ensemble avec ledit piston à ressort, cet écrou s'appuyant en position coaxiale sur ledit piston à ressort et coopérant en tant qu'une partie rigide à la torsion dudit système d'entraînement à broche filetée à une broche en arrangement stationnaire relatif à ladite tige de piston.

10. Cylindre de frein à ressort selon une quelconque des revendications précédentes,
**caractérisé en ce qu'**un ressort (20) est arrangé, qui est disposé entre ledit verrou (13) et ledit carter (1) et qui est configuré de la manière d'un ressort de pression ou un ressort de traction et qui tient ledit verrou (13) en une position de contact permanent contre ladite surface de glissement (19) de ladite partie rotative dudit système d'entraînement à broche filetée (12).

11. Cylindre de frein à ressort selon une quelconque des revendications précédentes,
**caractérisé en ce que** ledit verrou (13) est apte à être télécommandé moyennant un moyen auxiliaire.
